# EUROPÄISCHE PATENTSCHRIFT

(11) **EP 4 040 736 B1**
(45) Veröffentlichungstag und Bekanntmachung des Hinweises auf die Patenterteilung: **09.08.2023**
(21) Anmeldenummer: 21155818.4
(22) Anmeldetag: 08.02.2021
(51) Int. Cl.: H04L 12/28, H04L 12/40

(54) **SYSTEM, VORRICHTUNG UND VERFAHREN ZUR ÜBERTRAGUNG VON DATEN ZWISCHEN ZWEI NETZWERKEN**
SYSTEM, DEVICE AND METHOD FOR TRANSMITTING DATA BETWEEN TWO NETWORKS
SYSTÈME, DISPOSITIF ET PROCÉDÉ DE TRANSFERT DE DONNÉES ENTRE DEUX RÉSEAUX

(43) Veröffentlichungstag der Anmeldung: 10.08.2022
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- US-A1- 2019 342 795
- US-A1- 2020 205 036
- ISLAM MD TAMZEED ET AL: "Duty-Cycle-Aware Real-Time Scheduling of Wireless Links in Low Power WANs", 2018 14TH INTERNATIONAL CONFERENCE ON DISTRIBUTED COMPUTING IN SENSOR SYSTEMS (DCOSS), IEEE, 18. Juni 2018 (2018-06-18), Seiten 53-60, XP033431288, DOI: 10.1109/DCOSS.2018.00015 [gefunden am 2018-10-25]

## Beschreibung

### TECHNISCHES GEBIET

Die hier offenbarte Erfindung liegt auf dem Gebiet der Übertragung von Daten zwischen zwei Netzwerken, von denen wenigstens ein Netzwerk drahtlos betrieben wird.

### HINTERGRUND

Zum Koppeln mehrerer lokaler Netzwerke miteinander wird üblicherweise ein dediziertes Gerät bereitgestellt, das mit beiden Netzwerken verbunden ist und Daten von einem der Netzwerke zu dem anderen Netzwerk übertragen kann. Derartige Geräte werden als Router oder Gateway bezeichnet und sind erforderlich, um technische Unterschiede zwischen den beiden Netzwerken zu überbrücken und beispielsweise ein drahtloses Netzwerk mit einem drahtgebundenen Netzwerk oder allgemein Netzwerke zu koppeln, die unterschiedliche Hardware und/oder unterschiedliche Protokolle verwenden.

Speziell auf dem Gebiet der Gebäudeautomation müssen häufig drahtlose mit drahtgebundenen Netzwerken gekoppelt werden. Innerhalb eines derartigen drahtlosen Netzwerks können Geräte über disjunkte Funkkanäle kommunizieren. Beispielsweise kommunizieren manche Geräte über einen oder mehrere erste Funkkanäle, und kommunizieren andere Geräte im gleichen Netzwerk über einen oder mehrere zweite Funkkanäle, wobei die ersten und zweiten Funkkanäle unterschiedliche Frequenzen umfassen, die sich nicht überlappen. Ein konkretes Beispiel für solche unterschiedlich kommunizierenden Geräte sind einerseits Geräte, die batteriebetrieben sind und daher nur gelegentlich, beispielsweise zyklisch, auf ihre Funkkanäle zugreifen, wobei diese Funkkanäle mit geringer Frequenz betrieben werden und daher eher zur langsamen Datenübertragung geeignet sind. Andererseits können Geräte, die über eine dauerhafte Stromversorgung verfügen, häufig auf ihre Funkkanäle zugreifen, wobei diese Funkkanäle mit höherer Frequenz betrieben werden und sich zu einer schnelleren Datenübertragung eignen.

Ein Gateway, das ein solches drahtlos betriebenes Netzwerk mit einem zweiten Netzwerk koppelt, muss also in der Lage sein, Daten auf unterschiedlichen Frequenzen aus dem einen in das andere Netzwerk zu übertragen. Die Datenpakete, auch als Telegramme bezeichnet, können aufgrund der unterschiedlichen Frequenzen oder aufgrund von Protokollbestimmungen unterschiedlich lang sein; manche Datenpakete benötigen mehr Übertragungszeit als andere. Da in der Regel lediglich ein einzelnes Gateway oder einzelner Router zwischen zwei Netzwerken vorgesehen ist, kann es daher zum Verlust einzelner Telegramme kommen, beispielsweise bei Eintreffen eines kurzen Telegramms an einem Gateway, während dieses ein langes Telegramm überträgt. Auch wenn der Verlust von Telegrammen durch Protokolltechniken nachträglich erkannt und die Telegramme erneut gesendet werden können, sind derartige Verluste ein Nachteil, der die Übertragung von Daten einschränkt.

Zudem kann der intensive Betrieb des Gateways dazu führen, dass ein zulässiger Tastgrad (duty cycle) überschritten wird. Ein Duty-Cycle gibt das Verhältnis an, in dem während eines vorgegebenen Zeitraums durch das Gerät gesendet wird. Vielerorts existieren gesetzliche Regelungen, denen zufolge ein Gerät beim Senden auf einer bestimmten Frequenz einen bestimmten Duty-Cycle nicht überschreiten darf.

Somit liegt der vorliegenden Erfindung die Aufgabe zugrunde, eine Kopplung zwischen zwei Netzwerken zu ermöglichen, die eine schnelle Datenübertragung zwischen den Netzwerken gewährleistet. Aus der Patentanmeldung US2020205036 A1 ist ein System mit einem Lastausgleich zwischen Funkkanälen bekannt.

### ZUSAMMENFASSUNG

Ausführungsformen der Erfindung betreffen ein System, umfassend: ein drahtgebundenes Netzwerk; ein drahtloses Netzwerk; ein erstes Gerät, das mit dem drahtgebundenen und dem drahtlosen Netzwerk verbunden ist; und ein zweites Gerät, das mit dem drahtlosen Netzwerk und dem ersten Gerät verbunden ist, wobei die Verbindung zwischen dem ersten und dem zweiten Gerät drahtgebunden ist; wobei das erste Gerät eingerichtet ist, in einem ersten Betriebsmodus Daten aus dem drahtgebundenen Netzwerk auf einem oder mehreren ersten Funkkanälen in das drahtlose Netzwerk zu senden; wobei das zweite Gerät eingerichtet ist, in dem ersten Betriebsmodus Daten aus dem drahtgebundenen Netzwerk auf einem oder mehreren zweiten Funkkanälen in das drahtlose Netzwerk zu senden, wobei die ersten Funkkanäle von den zweiten Funkkanälen disjunkt sind; wobei das erste Gerät eingerichtet ist zu prüfen, ob eine vorgegebene maximal zulässige Nutzungsdauer der ersten Funkkanäle durch das erste Gerät innerhalb eines festen unmittelbar zurückliegenden Zeitraums erreicht wurde, und wobei als Antwort auf das Erreichen das erste und das zweite Gerät in einen zweiten Betriebsmodus wechseln, in dem das erste Gerät Daten aus dem drahtgebundenen Netzwerk auf den zweiten Funkkanälen in das drahtlose Netzwerk sendet und das zweite Gerät Daten aus dem drahtgebundenen Netzwerk auf den ersten Funkkanälen in das drahtlose Netzwerk sendet.

Vorteilhafterweise ist das erste Gerät ferner eingerichtet, in dem ersten Betriebsmodus Daten aus dem drahtlosen Netzwerk auf den ersten Funkkanälen zu lesen und die Daten an das drahtgebundene Netzwerk zu übertragen, und in dem zweiten Betriebsmodus Daten aus dem drahtlosen Netzwerk auf den zweiten Funkkanälen zu lesen und die Daten an das drahtgebundene Netzwerk zu übertragen.

Insbesondere ist das zweite Geräte ferner eingerichtet, in dem ersten Betriebsmodus Daten aus dem drahtlosen Netzwerk auf den zweiten Funkkanälen zu lesen und die Daten an das drahtgebundene Netzwerk zu übertragen, und in dem zweiten Betriebsmodus Daten aus dem drahtlosen Netzwerk auf den ersten Funkkanälen zu lesen und die Daten an das drahtgebundene Netzwerk zu übertragen.

Vorzugsweise ist das zweite Gerät eingerichtet, Daten an das drahtgebundene Netzwerk über das erste Gerät zu übertragen.

Gegebenenfalls ist das erste Gerät eingerichtet zu bestimmen, ob Daten aus dem drahtgebundenen Netzwerk über die ersten oder zweiten Funkkanäle an das drahtlose Netzwerk gesendet werden sollen.

Zweckmäßigerweise ist das erste Gerät eingerichtet, Daten aus dem drahtgebundenen Netzwerk an das zweite Gerät zu übertragen, wenn die Daten über einen anderen Funkkanal als den Funkkanal eines aktuellen Betriebsmodus des ersten Geräts versendet werden sollen.

Außerdem kann das erste Gerät und das zweite Gerät von Geräten aus dem drahtlosen Netzwerk und/oder dem drahtgebundenen Netzwerk unter der gleichen Adresse sichtbar sein.

Ausführungsformen umfassen ferner ein Verfahren, umfassend: Senden, durch ein erstes Gerät in einem ersten Betriebsmodus, von Daten aus einem drahtgebundenen Netzwerk auf einem oder mehreren ersten Funkkanälen in ein drahtloses Netzwerk; und Senden, durch ein zweites Gerät in dem ersten Betriebsmodus, von Daten aus dem drahtgebundenen Netzwerk auf einem oder mehreren zweiten Funkkanälen in das drahtlose Netzwerk, wobei die ersten Funkkanäle von den zweiten Funkkanälen disjunkt sind; wobei das erste Gerät prüft, ob eine vorgegebene maximal zulässige Nutzungsdauer der ersten Funkkanäle durch das erste Gerät innerhalb eines festen unmittelbar zurückliegenden Zeitraums erreicht wurde, und wobei das erste Gerät und das zweite Gerät als Antwort auf das Erreichen in einen zweiten Betriebsmodus wechseln, in dem das erste Gerät Daten aus dem drahtgebundenen Netzwerk auf den zweiten Funkkanälen in das drahtlose Netzwerk sendet und das zweite Gerät Daten aus dem drahtgebundenen Netzwerk auf den ersten Funkkanälen in das drahtlose Netzwerk sendet.

Vorteilhafterweise umfasst das Verfahren ferner: Lesen, durch das erste Gerät in dem ersten Betriebsmodus, von Daten aus dem drahtlosen Netzwerk auf den ersten Funkkanälen, und Übertragen der Daten an das drahtgebundene Netzwerk; und Lesen, durch das erste Gerät in dem zweiten Betriebsmodus, von Daten aus dem drahtlosen Netzwerk auf den zweiten Funkkanälen, und Übertragen der Daten an das drahtgebundene Netzwerk.

Insbesondere umfasst das Verfahren ferner: Lesen, durch das zweite Gerät in dem ersten Betriebsmodus, von Daten aus dem drahtlosen Netzwerk auf den zweiten Funkkanälen, und Übertragen der Daten an das drahtgebundene Netzwerk; und Lesen, durch das zweite Geräte in dem zweiten Betriebsmodus, von Daten aus dem drahtlosen Netzwerk auf den ersten Funkkanälen, und Übertragen der Daten an das drahtgebundene Netzwerk.

Vorzugsweise überträgt das zweite Gerät Daten an das drahtgebundene Netzwerk über das erste Gerät.

Gegebenenfalls umfasst das Verfahren ferner: Bestimmen, durch das erste Gerät, ob Daten aus dem drahtgebundenen Netzwerk über die ersten oder zweiten Funkkanäle an das drahtlose Netzwerk gesendet werden sollen.

Außerdem kann das Verfahren umfassen: Übertragen, durch das erste Gerät, von Daten aus dem drahtgebundenen Netzwerk an das zweite Gerät, wenn die Daten über einen anderen Funkkanal als den Funkkanal eines aktuellen Betriebsmodus des ersten Geräts versendet werden sollen.

Zweckmäßigerweise umfasst das Verfahren auch: Prüfen, durch das zweite Gerät, ob eine vorgegebene maximal zulässige Nutzungsdauer der zweiten Funkkanäle durch das zweite Gerät innerhalb eines festen unmittelbar zurückliegenden Zeitraums erreicht wurde, und Wechseln der Betriebsmodi des ersten Geräts und des zweiten Geräts als Antwort auf das Erreichen.

Ausführungsformen betreffen außerdem ein computerlesbares Medium mit darauf gespeicherten Befehlen, die, wenn sie von einem Prozessor ausgeführt werden, eines der genannten Verfahren durchführen.

### KURZE BESCHREIBUNG DER ZEICHNUNGEN

Figuren 1A und 1B sowie 2A und 2B zeigen eine erfindungsgemäße Verbindung zwischen zwei Netzwerken und deren Betrieb.
Figuren 3A, 3B und 3C zeigen erfindungsgemäße Verfahren zum Übertragen von Daten von einem ersten Netzwerk in ein zweites Netzwerk.
Figuren 4A und 4B zeigen erfindungsgemäße Verfahren zum Übertragen von Daten von dem zweiten Netzwerk in das erste Netzwerk.

### AUSFÜHRLICHE BESCHREIBUNG

In den vorliegenden Erläuterungen wird unter einem Kanal ein oder mehrere Funkkanäle verstanden. Ist ein erster Kanal disjunkt von einem zweiten Kanal, laufen seine Funkkanäle über Frequenzen, die sich von den Frequenzen des zweiten Kanals unterscheiden und sich insbesondere nicht mit diesen überlappen. Datenpakete oder Telegramme werden allgemein als Daten bezeichnet. Unter Duty-Cycle wird im Folgenden eine maximale (akkumulierte) Zeitdauer verstanden, in der innerhalb eines Zeitintervalls Daten auf einer bestimmten Frequenz gesendet werden dürfen. Der Duty-Cycle kann wahlweise als Prozentzahl (beispielsweise 90% eines Intervalls von einer Stunde darf auf Frequenz N gesendet werden) oder als absoluter Wert betrachtet werden (beispielsweise 45 Minuten darf auf Frequenz N in einem Intervall von einer Stunde gesendet werden). Unter einem Gerät wird eine Vorrichtung verstanden, die in der Lage ist, in einem Netzwerk zu kommunizieren, also beispielsweise ein beliebiger netzwerkfähiger Computer, Mobiltelefon, Drucker etc.

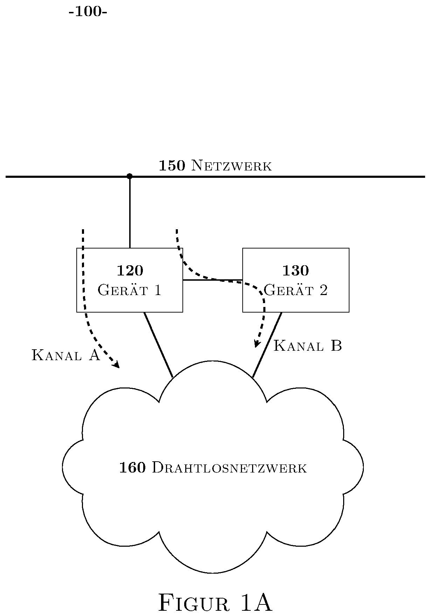

Figur 1A zeigt ein drahtgebundenes Netzwerk 150 und drahtloses Netzwerk 160, die über ein erstes Gerät 120 miteinander verbunden sind. Das Gerät 120 kann als eine von mehreren Vorrichtungen betrachtet werden, die innerhalb des Netzwerks 150 gekoppelt sind. Das erste Gerät 120 ist mit einem zweiten Gerät 130 verbunden. Dieses Gerät 130 ist ebenfalls an das drahtlose Netzwerk 160 angeschlossen. Die Verbindung zwischen beiden Geräten ist vorzugsweise drahtgebunden. Das Gerät 130 kann auch mit dem drahtgebundenen Netzwerk 150 verbunden sein, jedoch ist dies für die Erfindung nicht erforderlich. Die Geräte 120 und 130 dienen als Schnittstelle zwischen den beiden Netzwerken und sind eingerichtet, Daten von einem der Netzwerke in das andere zu übertragen.

Das erste Gerät 120 empfängt Daten aus dem drahtgebundenen Netzwerk 150. Diese Daten umfassen sowohl Daten, die auf einem ersten Kanal in das zweite Netzwerk 160 übertragen werden sollen, als auch Daten, die auf einem zweiten Kanal in das zweite Netzwerk 160 übertragen werden sollen. Der erste und der zweite Kanal sind voneinander disjunkt und verwenden somit unterschiedliche Frequenzen, die sich zwischen erstem und zweiten Kanal nicht überschneiden oder überlappen. In Figur 1A sind die Daten beider Kanäle als "Kanal A" und "Kanal B" bezeichnet. Beispielsweise kann "Kanal A" Daten betreffen, die auf schnelleren Frequenzen als "Kanal B" gesendet werden sollen.

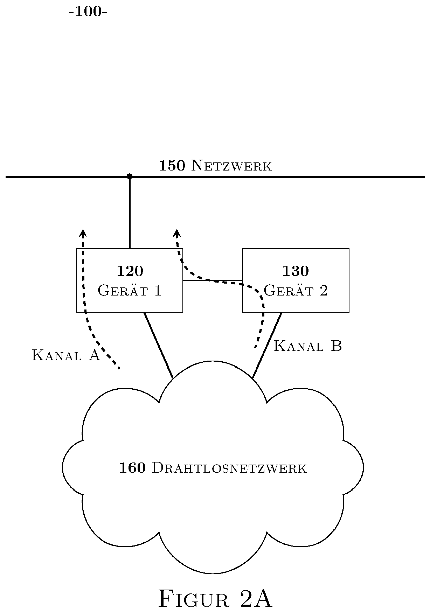

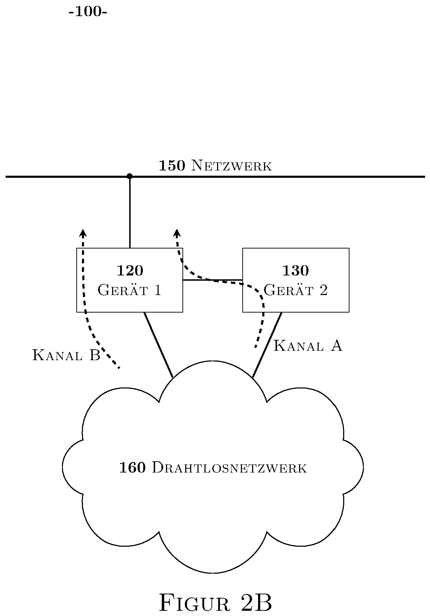

Das erste Gerät 120 entscheidet, ob die empfangenen Daten über Kanal A oder Kanal B versendet werden sollen. In einer ersten Ausführungsform kann der Kanal aus einem Format der Daten abgeleitet werden, beispielsweise einem Flag, das von dem sendenden Gerät in Netzwerk 150 entsprechend gesetzt wurde. In einer zweiten Ausführungsform kann der Kanal anhand der Zieladresse der Daten ermittelt werden. Beispielsweise kann das Gerät 120 eingerichtet sein, eine Tabelle zu unterhalten, in der die Adressen von Geräten des drahtlosen Netzwerks 160 auf den jeweils von diesen Geräten verwendeten Kanal abgebildet sind. Beispielsweise kann eine solche Tabelle fortlaufend aktualisiert werden, wenn Daten von Geräten des Drahtlosnetzwerks 160 an Gerät 120 empfangen werden; diese Möglichkeit wird unter Bezugnahme auf Figuren 2A und 2B erläutert. Empfängt das Gerät 120 aus dem drahtgebundenen Netzwerk 150 Daten, deren Zielgerät in der Tabelle nicht aufgeführt ist, kann zur weiteren Übertragung ein Standardwert verwendet werden, also Kanal A oder Kanal B.

In dem in Figur 1A gezeigten Betriebsmodus ist das erste Gerät 120 eingerichtet, Daten, die auf Kanal A gesendet werden sollen, direkt in das Drahtlosnetzwerk 160 zu übertragen. Daten, die auf Kanal B gesendet werden sollen, überträgt das Gerät 120 hingegen an das zweite Gerät 130, von wo die Daten wiederum an das Drahtlosnetzwerk 160 gesendet werden. Beide Geräte 120 und 130 enthalten gegebenenfalls technische Mittel zur Konvertierung drahtgebundener in drahtlose Protokolle, beispielsweise im Wege von Tunneling oder von Kapselungen innerhalb des Schichtenmodells (OSI); solche Konversionen stehen im Belieben des Fachmanns, und ihre konkrete Implementation ist nicht Teil der Erfindung.

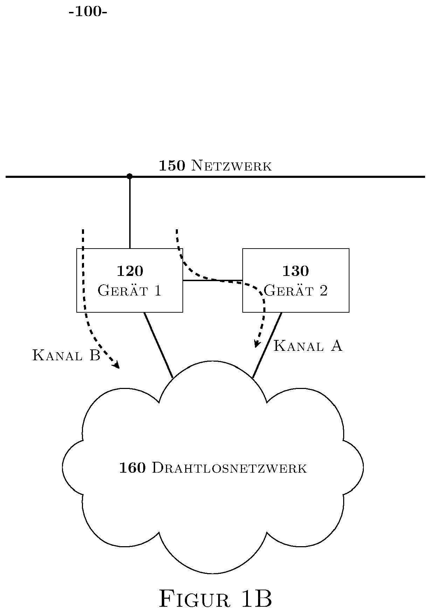

Figur 1B zeigt den Betrieb der Geräte 120 und 130 in einem zweiten Betriebsmodus. Auch in diesem Betriebsmodus empfängt das erste Gerät 120 aus dem drahtgebundenen Netzwerk 150 Daten, die über Kanal A oder Kanal B in das Drahtlosnetzwerk 160 gesendet werden sollen. Anders als im ersten Betriebsmodus dient das erste Gerät 120 aber nunmehr zur Versendung derjenigen Daten, die über Kanal B übertragen werden sollen, und leitet die über Kanal A zu sendenden Daten an das zweite Gerät 130 weiter. Zur Bestimmung des jeweiligen Kanals können die bereits erläuterten Tabellen oder auch ein Format der Daten herangezogen werden.

In einer besonderen Ausführungsform kann das erste Gerät 120 unabhängig vom Betriebsmodus (Kanal A oder Kanal B) zusätzlich prüfen, ob die Daten sowohl über Kanal A als auch über Kanal B gesendet werden sollen. In diesem Fall sendet das erste Gerät 120 die Daten über seinen Kanal an das Drahtlosnetzwerk 160 und auch an das zweite Gerät 130, das die Daten über den anderen Kanal ebenfalls an das Drahtlosnetzwerk 160 sendet. Diese Ausführungsform ist von Vorteil, wenn die Daten an verschiedene Geräte des Drahtlosnetzwerks 160 gesendet werden sollen, wobei unter diesen Geräten einige sind, die auf dem einen Kanal empfangen und andere, die auf dem anderen Kanal empfangen. Ein beispielhaftes Szenario sind batteriebetriebene Geräte und an die Hauselektrik angeschlossene Geräte, für die jeweils disjunkte Kanäle vorgesehen sind, und die in bestimmten Fällen die gleichen Daten erhalten sollen

Der erste und der zweite Betriebsmodus sind vorgesehen, um zu vermeiden, dass eines der Geräte 120 und 130 einen vorgegebenen Duty-Cycle auf dem jeweils verwendeten Kanal erreicht oder überschreitet.

Die Geräte 120 und 130 können von dem ersten in den zweiten Betriebsmodus wechseln, und umgekehrt. Zu Betriebsbeginn arbeiten beide Geräte mit einer Anfangskonfiguration, beispielsweise Gerät 120 auf Kanal A und Gerät 130 auf Kanal B, oder umgekehrt. Die Anfangskonfiguration kann aus einem letztmaligen Betrieb der beiden Geräte übernommen sein, oder kann zufällig oder per Standardbelegung erfolgen. Jedes der Geräte 120 und 130 ist mit je einem Duty-Cycle für den ersten Kanal und für den zweiten Kanal programmiert, oder hat Zugriff auf diese Werte. Darüber hinaus kann jedes der Geräte 120 und 130 eine Datenstruktur unterhalten, vorzugsweise eine Liste, in der die bereits verwendeten Sendezeiten je Kanal abgelegt sind. Beispielsweise enthält das Gerät 120 eine erste Liste für den ersten Kanal und eine zweite Liste für den zweiten Kanal. Wird ein Sendevorgang auf einem Kanal abgeschlossen, ergänzt das Gerät diejenige Liste, die diesem Kanal zugeordnet ist. Beispielsweise kann hierzu einfach je ein Zeitstempel für Beginn und Ende des Sendevorgangs an die Liste gehängt werden (push), oder kann nach Ende des Sendevorgangs die Sendedauer angehängt werden.

Empfängt das erste Gerät 120 Daten aus dem drahtgebundenen Netzwerk 150, entscheidet es nach der Bestimmung des zu verwendenden Kanals (siehe oben, Figur 1A) darüber, ob die Daten durch das erste Gerät 120 oder durch das zweite Gerät 130 an das Drahtlosnetzwerk 160 gesendet werden sollen. Vorteilhafterweise wird dies durch einen Vergleich des aktuell von dem ersten Gerät 120 verwendeten Kanals mit dem für die Daten zu verwendenden Kanal bestimmt. Unterscheiden sich die Kanäle, sendet das erste Gerät 120 die Daten an das zweite Gerät 130. Sind jedoch beide Kanäle identisch, prüft das erste Gerät 120, ob sein Duty-Cycle für diesen Kanal erreicht ist. Beispielsweise akkumuliert das erste Gerät 120 die gespeicherten Dauern von Sendevorgängen, die für diesen Kanal in einem ab dem aktuellen Zeitpunkt zurückliegenden Zeitraum durchgeführt wurden. Das Gerät 120 prüft anschließend, ob diese akkumulierte Gesamtdauer größer ist als der gespeicherte Duty-Cycle. Ist dies der Fall, benachrichtigt das erste Gerät 120 das zweite Gerät 130 und wechselt in den zweiten Betriebsmodus. Das zweite Gerät 130 wechselt als Antwort auf diese Benachrichtigung ebenfalls den Betriebsmodus.

Bei der Bestimmung des zu verwendenden Kanals kann das erste Gerät 120 in einer besonderen Ausführungsform zusätzlich prüfen, ob nicht nur der Kanal des ersten Geräts 120, sondern auch der Kanal des zweiten Geräts 130 zu verwenden ist. Ist dies der Fall, sendet das erste Gerät 120 die Daten sowohl an das Drahtlosnetzwerk 160 als auch an das zweite Gerät 130.

Unabhängig von dem ersten Gerät 120 prüft auch das zweite Gerät 130 fortwährend oder bei Erhalt von Daten für das Drahtlosnetzwerk 160, ob sein Duty-Cycle für den aktuell von dem zweiten Gerät 130 verwendeten Kanal erreicht oder überschritten wurde. Hierzu verfährt es analog wie das erste Gerät 120 und verständigt dieses, wenn sein Duty-Cycle überschritten wurde, und wechselt den Betriebsmodus. Auf diese Weise wird sichergestellt, dass immer beide Geräte zeitnah den Modus wechseln, so dass beide Geräte unterschiedliche Kanäle betreiben.

Die Prüfung auf Erreichen oder Überschreiten des Duty-Cycles kann eine Prüfung auf eine Annäherung an den Duty-Cycle umfassen, beispielsweise mittels Prüfung auf Überschreiten eines Schwellwerts unterhalb des Duty-Cycles. Die Prüfung wird vorzugsweise vorgenommen als Reaktion auf einen Erhalt von Daten aus dem drahtgebundenen Netzwerk 150, da in diesem Fall ein Sendevorgang via Funk bevorsteht. Alternativ kann die Prüfung in regelmäßigen Abständen, unabhängig von eintreffenden Daten, durchgeführt werden.

Figur 2A zeigt einen Betrieb der Geräte 120 und 130 in dem in Figur 1A gezeigten Betriebsmodus, wobei die Daten gegenüber der Figur 1A in entgegengesetzter Richtung, nämlich von dem Drahtlosnetzwerk 160 in das drahtgebundene Netzwerk 150, übertragen werden. Da das erste Gerät 120 in diesem Betriebsmodus auf dem Kanal A arbeitet, liest es aus dem Drahtlosnetzwerk 160 lediglich Daten auf Kanal A, während das zweite Gerät 130 Daten auf Kanal B liest. Das erste Gerät 120 leitet die gelesenen Daten in das Netzwerk 150 weiter, gegebenenfalls nach Konvertierung der verwendeten Protokolle. Das zweite Gerät 130 leitet gelesene Daten über das erste Gerät 120 in das Netzwerk 150 weiter. Alternativ kann das zweite Gerät 130 Daten auch über eine direkte Verbindung (nicht gezeigt) in das Netzwerk 150 übertragen. Der Vorteil einer direkten Verbindung liegt darin, dass die Verarbeitung von Daten besser zwischen dem ersten und dem zweiten Gerät aufgeteilt wird. Der Vorteil eines Verzichts auf eine direkte Verbindung liegt hingegen darin, dass das Routing von Daten aus Sicht der Geräte in dem drahtgebundenen Netzwerk 150 vereinfacht wird, da lediglich das erste Gerät 120 von dort angesteuert werden kann.

Die Geräte 120 und 130 nutzen das Eintreffen jeweiliger Daten vorzugsweise dazu, die bereits erläuterten Tabellen zu aktualisieren. Hierzu prüft das jeweilige Gerät, ob für ein Gerät, das die Daten aus dem Drahtlosnetzwerk 160 oder aus dem drahtgebundenen Netzwerk 150 sendete, in der Tabelle bereits ein Kanal eingetragen ist, und ob dieser Kanal identisch mit dem aktuellen Kanal dieser Daten beziehungsweise des Gerätes ist. Gegebenenfalls wird ein neuer Eintrag in die Tabelle eingestellt oder ein bestehender Eintrag angepasst.

Figur 2B zeigt ergänzend den Betrieb der Geräte 120 und 130 in dem in Figur 1B gezeigten Betriebsmodus; beide Geräte arbeiten auf den gleichen Kanälen wie in Figur 1B, und lesen auf diesen Kanälen Daten aus dem Drahtlosnetzwerk 160. Die weitere Funktionsweise der beiden Geräte 120 und 130 folgt den obigen Erläuterungen bezüglich der Figur 2A.

Der Betrieb gemäß Figuren 1A und 2A kann simultan erfolgen, sofern das erste Gerät 120 über entsprechende Sende- und Empfangsmittel (Antenne) verfügt, die das gleichzeitige Senden und Empfangen von Daten in und aus dem Drahtlosnetzwerk 160 ermöglichen. Im übrigen erfolgt der Betrieb gemäß Figur 1A unabhängig (asynchron) von dem Betrieb gemäß Figur 2A. Ebenso kann der Betrieb gemäß Figuren 1B und 2B gleichzeitig und unabhängig voneinander erfolgen.

Die Erfindung vermeidet Verzögerungen bei der Versendung von Paketen, die ohne einen Wechsel der Betriebsmodi eintreten würde, sobald ein Duty-Cycle überschritten wird. Auch vermeidet die Erfindung einen höheren Aufwand an Hardware, der bei einer höheren Anzahl parallel arbeitender Router entstünde; auch das Routing zwischen den Netzwerken wäre komplexer als bei einem einzelnen erfindungsgemäßen Router (erstes Gerät) mit verdeckt arbeitendem zweiten Gerät, das für das drahtgebundene Netzwerk nicht sichtbar ist.

Die gezeigten Ausführungsformen bieten überdies den Vorteil, Verluste von Datenpaketen (Telegrammen) an Gerät 120 einzuschränken. Dieser Vorteil ergibt sich daraus, dass ein erheblicher Teil der von Gerät 120 empfangenen Daten ohne Konversion durch das Gerät 120 direkt an das Gerät 130 übertragen wird. Durch den Verzicht auf die Konversion kann das Gerät 120 unmittelbar den Empfang und die Verarbeitung weiterer Daten fortsetzen, so dass Verluste reduziert werden. Zudem verteilt sich der mögliche Duty-Cycle auf zwei Geräte, so dass die Wahrscheinlichkeit sinkt, dass der Duty-Cycle beim Betrieb überhaupt erreicht wird.

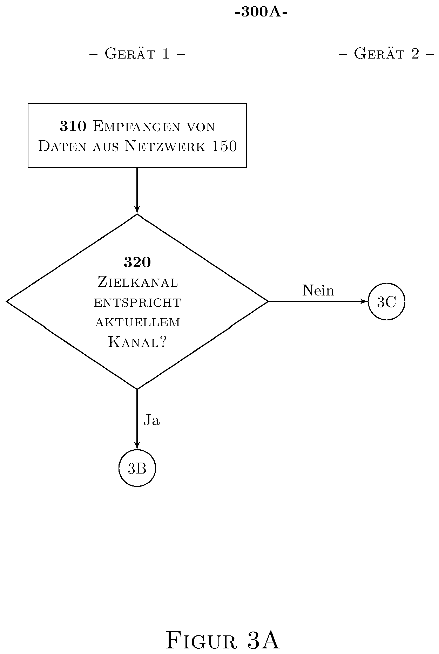

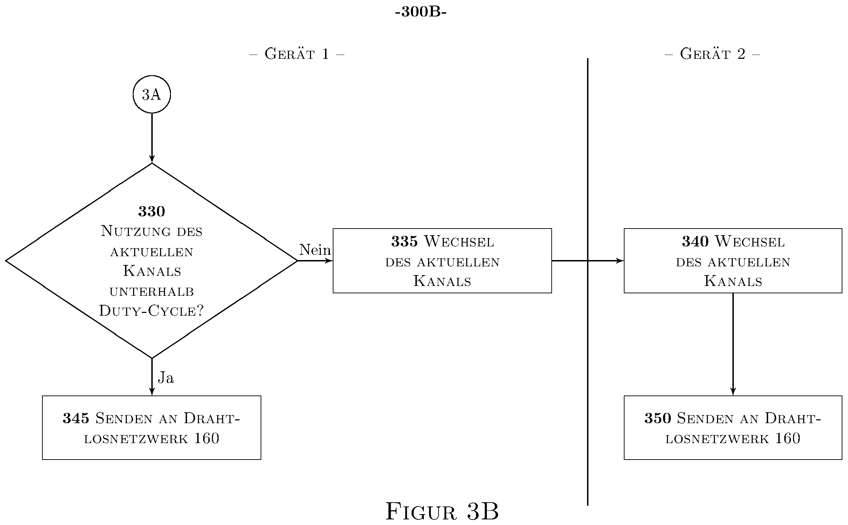

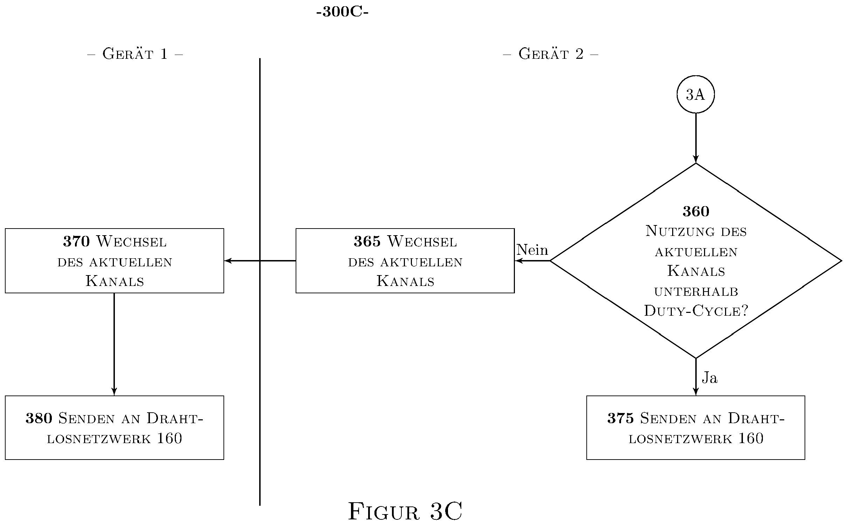

Figuren 3A, 3B und 3C zeigen erfindungsgemäße Verfahren 300A, 300B und 300C, die die in Figuren 1A und 1B gezeigten Arbeitsweisen der Geräte 120 und 130 darstellen, also die Übertragung von Daten aus dem drahtgebundenen Netzwerk 150 in das drahtlose Netzwerk 160. In den Figuren 3A, 3B und 3C sind die einzelnen Schritte in zwei Spalten angeordnet; die Schritte der linken Spalte werden durch das erste Gerät 120 ausgeführt, die Schritte der rechte Spalte werden durch das zweite Geräte 130 ausgeführt. Dies ist durch die Überschriften "Gerät 1" und "Gerät 2" angedeutet und wird in den Figuren 3B und 3C durch eine senkrechte Trennlinie hervorgehoben.

In Schritt 310 empfängt das erste Gerät 120 Daten aus dem drahtgebundenen Netzwerk 150. Daraufhin ermittelt das Gerät 120 zunächst den Kanal, auf dem die Daten in das Drahtlosnetzwerk 160 gesendet werden sollen, beispielsweise durch Nachschlagen in einer Tabelle, die angibt, welcher der Kanäle für ein Zielgerät der Daten in dem Drahtlosnetzwerk 160 verwendet werden soll, oder durch Interpretieren eines Formats der Daten; derartige Maßnahmen wurden bereits oben beschrieben. In Schritt **320** prüft das erste Gerät 120, ob der Zielkanal, also derjenige Kanal, auf dem die empfangenen Daten gesendet werden sollen, dem Kanal entspricht, der von dem Gerät 120 in seinem aktuellen Betriebsmodus verwendet wird. In diesem Fall wird das Verfahren 300A mit dem Verfahren 300B gemäß Figur 3B fortgesetzt. Andernfalls wird das Verfahren 300A mit dem Verfahren 300C gemäß Figur 3C fortgesetzt. In einer besonderen Ausführungsform können auch beide Verfahren 300 B und 300 C durchgeführt werden, beispielsweise wenn das erste Gerät 120 im Schritt 320 feststellt, dass die Daten über beide Kanäle versendet werden sollen.

Figur 3B zeigt das Verfahren 300B, das durchgeführt wird, wenn die empfangenen Daten auf dem Kanal des ersten Geräts 120 versendet werden sollen. Das erste Gerät prüft in Schritt 330, ob ein Duty-Cycle überschritten wurde. Diese Prüfung umfasst Vergleichen einer Gesamtdauer von Datensendungen, die innerhalb eines festgesetzten zum aktuellen Zeitpunkt vergangenen Zeitintervalls über den aktuellen Kanal vorgenommen wurden, mit einem vorgegebenen festen Duty-Cycle-Wert für diesen Kanal, beispielsweise einem gesetzlich vorgeschriebenen maximal zulässigen Wert. In einer Ausführungsform umfasst dieses Vergleichen das Akkumulieren aller Zeiträume, in denen innerhalb des vergangenen Zeitintervalls auf diesem Kanal gesendet wurde. Beispielsweise kann das Verfahren hierzu auf eine Liste solcher Zeiträume zurückgreifen, in der sämtliche Zeiträume mit zugehörigen Zeitdauern, insbesondere in Form von Zeitstempeln von Beginn und Ende jeder Datensendung, abgelegt sind. Eine solche Liste wird für jeden Kanal separat geführt. Sind die empfangenen Daten also beispielsweise über den ersten Kanal A zu versenden, wird der Vergleich anhand der für den ersten Kanal A geführten Liste und dem Duty-Cycle-Wert für diesen Kanal durchgeführt. Sind die empfangenen Daten hingegen über den zweiten Kanal B zu versenden, wird der Vergleich anhand der für den zweiten Kanal B geführten Liste und dem Duty-Cycle Wert für Kanal B durchgeführt. Das Durchführen des Vergleichs umfasst beispielsweise Ermitteln des prozentualen Anteils der akkumulierten Gesamtdauer an dem Duty-Cycle-Wert. Ist der Duty-Cycle für den Kanal unterschritten, liegt also beispielsweise unterhalb eines vorbestimmten maximal erlaubten Prozentsatzes, oder unterhalb eines vorgegebenen Schwellwerts, der unter dem erlaubten Duty-Cycle liegt, so sendet das erste Gerät 120 die Daten in Schritt 345 an das Drahtlosnetzwerk 160. Vorzugsweise wird zu Beginn und Ende dieses Sendevorgangs je ein Zeitstempel in die bereits erläuterte Liste für diesen Kanal geschrieben.

Ist der vorgegebene Duty-Cycle für den aktuellen Kanal jedoch annähernd (Schwellwert) erreicht oder überschritten, wechselt das erste Gerät 120 in Schritt 335 auf den anderen Kanal, mit der Folge, dass dieser andere Kanal nun als aktueller Kanal verwendet wird; dies gilt für beide Übertragungsrichtungen zwischen den Netzwerken 150 und 160. Der Wechsel des Kanals kann als Wechsel des Betriebsmodus bezeichnet werden. Ferner umfasst Schritt 335, das zweite Gerät 130 über den Wechsel zu benachrichtigen; hierzu sendet das erste Gerät 120 über die direkte Verbindung zwischen beiden Geräten ein vordefiniertes Datenpaket oder anderweitige vordefinierte Nachricht. Ferner umfasst Schritt 335 die Übertragung der zu versendenden Daten an das zweite Gerät 130.

Das Verfahren 300B wird bei dem zweiten Gerät 130 fortgesetzt. In Schritt 340 wechselt das zweite Gerät 130 als Antwort auf die Benachrichtigung den Kanal, so dass nun beide Geräte wieder unterschiedliche Kanäle verwenden. In Schritt 350 sendet das zweite Gerät 130 die Daten an das Drahtlosnetzwerk 160 und verwendet dazu den zuvor von dem ersten Gerät 120 verwendeten Kanal.

Figur 3C zeigt das Verfahren 300C, das durchgeführt wird, wenn in Schritt 320 des Verfahrens 300A/Figur 3A festgestellt wurde, dass die Daten aus Netzwerk 150 auf einem anderen Kanal als dem aktuellen Kanal des ersten Geräts 120 beziehungsweise gemäß einer besonderen Ausführungsform auf beiden Kanälen gesendet werden sollen. Das Verfahren 300C beginnt in Schritt 360, wo das zweite Gerät 130 ermittelt, ob die bisherige Nutzung des aktuellen Kanals des zweiten Geräts unterhalb von dessen Duty-Cycle für diesen Kanal liegt. Wie bereits erläutert wurde, verfügt auch das zweite Gerät 130 über je einen Duty-Cycle für jeden der beiden Kanäle. Der Vergleich der bisherigen Nutzung mit dem Duty-Cycle folgt analog den bezüglich Schritt 330 von dem ersten Gerät 120 durchgeführten Maßnahmen, also beispielsweise Akkumulieren von bisherigen Nutzungszeiten auf dem Kanal innerhalb eines zu diesem Zeitpunkt vergangenen festen vorgegebenen Intervalls, basierend auf einer Liste für diesen Kanal, die die Nutzungszeiten in Form von Zeitstempeln festhält. Die zu versendeten Daten kann das zweite Gerät 130 bereits mit dem Übergang von Schritt 320 (Figur 3A) zu Schritt 360 (Figur 3C) von dem ersten Gerät 120 erhalten haben; alternativ kann die Übertragung der Daten von Gerät 120 zu Gerät 130 von dem Ergebnis der Prüfung in Schritt 360 abhängig gemacht werden, indem die Daten erst dann an das Gerät 130 übertragen werden, wenn der Duty-Cycle dieses Geräts nicht überschritten wurde.

Liegt die ermittelte Nutzung des aktuellen Kanals durch das zweite Gerät 130 unterhalb des Duty-Cycles für diesen Kanal, sendet das zweite Gerät 130 in Schritt 375 die Daten an das Drahtlosnetzwerk 160. Vorzugsweise schreibt das zweite Gerät 130 Zeitstempel für Beginn und Ende des Sendevorgangs in die bereits genannte Liste für diesen Kanal.

Liegt die in Schritt 360 ermittelte Nutzung nahe bei oder über dem Duty-Cycle, was etwa anhand eines geeigneten Schwellwerts eines Prozentsatzes oder eines absoluten Zeitwerts ermittelt werden kann, wechselt das zweite Gerät 130 in Schritt 365 von seinem aktuellen Kanal auf den anderen Kanal, verständigt das erste Gerät von dieser Maßnahme und sendet die Daten zurück an das erste Gerät 120. Dieses wechselt in Schritt 370 ebenfalls seinen Kanal; nach diesen Wechseln arbeiten beide Geräte wieder auf unterschiedlichen Kanälen. Das erste Gerät 120 sendet in Schritt 380 die Daten über den eingewechselten Kanal an das Drahtlosnetzwerk 160. Diese Daten kann das erste Gerät 120 in Schritt 370 von dem zweiten Gerät 130 erhalten; alternativ greift das erste Gerät 120 auf die Daten aus Schritt 310 zurück. Vorzugsweise werden Beginn und Ende des Sendevorgangs in Schritt 380 von dem ersten Gerät 120 festgehalten, beispielsweise in Form von Zeitstempeln, die einer Liste für den aktuellen Kanal angehängt werden. Sämtliche Schritte, die das Versenden von Daten an das Drahtlosnetzwerk 160 betreffen, also die Schritte 345, 350, 375 und 380, können geeignetes Konvertieren der Daten von einem Protokoll oder sonstigen Format des Netzwerks 150 in ein Protokoll oder Format des Netzwerks 160 umfassen.

Wie erläutert, umfassen die Verfahren 300B und 300 C beziehungsweise Figuren 3B und 3B Schritte 330 beziehungsweise 360 zur Prüfung, ob ein Duty-Cycle ausgeschöpft ist; diese Schritte werden als Antwort auf Empfangen von Daten an dem jeweiligen Gerät 120 oder 130 durchgeführt. Diese Ausführungsform erzielt den Vorteil, dass die Anzahl der Prüfungen gegenüber einer regelmäßigen datenunabhängigen Prüfung reduziert ist, und dass die Gefahr einer Überschreitung der Duty-Cycles reduziert ist. Alternativ kann die Prüfung jedoch auch unabhängig von dem Empfang von Daten durchgeführt werden, beispielsweise in regelmäßigen Intervallen. Eine solche Ausführungsform umfasst somit lediglich die Schrittfolge 330, 335, 340 beziehungsweise 360, 365, 370, ohne dass unmittelbar vorher oder nachher Daten empfangen beziehungsweise gesendet werden. Diese Ausführungsform erzielt den Vorteil, dass die Maßnahmen zum Kanalwechsel in beiden Geräten den Datenfluss von dem ersten Netzwerk 150 zu dem zweiten Netzwerk 160 nicht verzögern. Eine weitere Alternative ist das Prüfen des Duty-Cycles jedes Mal nach dem Senden von Daten in das Drahtlosnetzwerk 160. Ferner umfasst die Erfindung Ausführungsformen, in denen das erste Gerät 120 die Prüfung beider Duty-Cycles vornimmt. In dieser Ausführungsform prüft das erste Gerät 120 den Duty-Cycle seines aktuellen Kanals, entweder als Antwort auf empfangene Daten oder in regelmäßigen Abständen, und leitet gegebenenfalls den Kanalwechsel bei beiden Geräten ein.

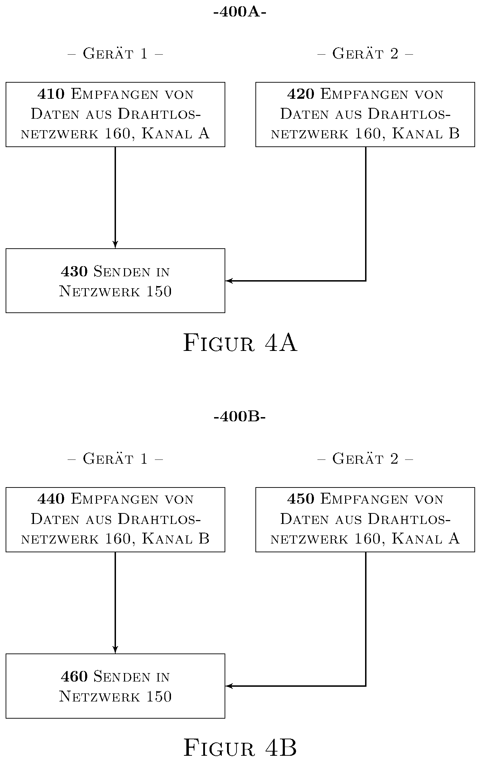

Die Figuren 4A und 4B zeigen Verfahren 400A und 400B, die die Arbeitsweise der in den Figuren 2A beziehungsweise 2B gezeigten Vorrichtungen darstellen. Diese Arbeitsweise betrifft die Übertragung von Daten aus dem Drahtlosnetzwerk 160 in das drahtgebundene Netzwerk 150.

In dem in Figur 4A gezeigten Verfahren 400A ist das erste Gerät 120 eingerichtet, einen ersten Kanal A als aktuellen Kanal zu verwenden. Das Gerät 120 liest in Schritt 410 aus dem Drahtlosnetzwerk lediglich Daten, die auf diesem Kanal gesendet werden. Unabhängig davon liest das zweite Gerät 130 in Schritt 420 lediglich Daten aus dem Drahtlosnetzwerk 160, die auf dem zweiten Kanal B erscheinen. Das zweite Gerät 130 überträgt diese Daten über eine direkte Verbindung an das erste Gerät 120. In Schritt 430 überträgt das erste Gerät 120 die von ihm gelesenen beziehungsweise die von dem zweiten Gerät 130 erhaltenen Daten in das Netzwerk 150.

In einer alternativen Ausführungsform ist nicht nur das erste Gerät 120, sondern auch das zweite Gerät 130 mit dem drahtgebundenen Netzwerk 150 direkt verbunden. In diesem Fall umfasst Schritt 420 nicht das Übertragen von Daten des zweiten Geräts 130 an das erste Gerät 120, sondern überträgt die Daten dieses Kanals direkt an das Netzwerk 150.

Die Schritte 410 und 420 können von dem jeweiligen Gerät genutzt werden, um eine Tabelle zu aktualisieren, in der festgehalten wird, welcher der beiden Kanäle von welchem der sendenden Geräte in dem Drahtlosnetzwerk 160 genutzt wird. Die Tabelle bildet also Geräte auf Kanäle ab. Diese Information kann in Schritt 410 beziehungsweise 420 den empfangenen Daten entnommen werden, beispielsweise in Form einer IP-Adresse des Geräts in dem Drahtlosnetzwerk 160, das die Daten sendete, in Verbindung mit dem aktuellen Kanal beziehungsweise demjenigen Kanal, auf dem die Daten an dem ersten oder zweiten Gerät empfangen werden. Das Aktualisieren der Tabelle kann eine Prüfung darauf umfassen, ob für das jeweils sendende Gerät des Drahtlosnetzwerks 160 bereits ein Eintrag existiert, und ob dieser Eintrag den aktuellen Kanal wiedergibt. Lediglich im Fall eines fehlenden oder abweichenden Eintrags wird eine Anpassung der Tabelle vorgenommen.

Das in Figur 4B gezeigte Verfahren 400B verläuft analog zu dem Verfahren 400A; das erste Gerät 120 liest Daten auf Kanal B, das zweite Gerät 130 liest Daten auf Kanal A.

Die in den Figuren 4A und 4B gezeigten Schritte werden unabhängig von und gegebenenfalls gleichzeitig mit den Verfahren 300A, 300B, 300C durchgeführt, sofern die Geräte 120 und 130 über Sende- und Empfangsmittel verfügen, die ein gleichzeitiges Senden und Empfangen von Daten in beziehungsweise aus dem Drahtlosnetzwerk 160 erlauben. Ist der aktuelle Kanal des ersten Geräts 120 beispielsweise Kanal A und der aktuelle Kanal des zweiten Geräts 130 Kanal B, können beide Geräte auch gemäß dem Verfahren 400A arbeiten.

Die hier beschriebenen Ausführungsformen lassen sich auf mehr als zwei Geräte 120, 130 ausdehnen.

Die Erfindung ermöglicht somit eine effiziente Datenübertragung zwischen zwei Netzwerken in beide Richtungen. Ein besonderer Vorteil liegt darin, dass die Geräte 120 und 130 auf unterschiedlichen Kanälen arbeiten und die Kanäle unter bestimmten Umständen wechseln. Dadurch wird die Verarbeitung der Daten in diesen Geräten erheblich beschleunigt und insbesondere sichergestellt, dass vorgegebene Kanalbeschränkungen (Duty-Cycle) eingehalten werden. Ein weiterer Vorteil ist, dass nach einer Prüfung des Duty-Cycles in einem der beiden Geräte die Prüfung auf dem anderen Gerät für den gleichen Kanal nicht ebenfalls durchgeführt zu werden braucht - da das andere Gerät bis zu diesem Zeitpunkt auf dem anderen Kanal arbeitete, ist die Wahrscheinlichkeit eines Überschreitens des Duty-Cycles für den gleichen Kanal durch beide Geräte sehr gering.

## Patentansprüche

1. System (100), umfassend:
ein drahtgebundenes Netzwerk (150);
ein drahtloses Netzwerk (160);
ein erstes Gerät (120), das mit dem drahtgebundenen und dem drahtlosen Netzwerk verbunden ist; und
ein zweites Gerät (130), das mit dem drahtlosen Netzwerk und dem ersten Gerät verbunden ist, wobei die Verbindung zwischen dem ersten und dem zweiten Gerät drahtgebunden ist;
wobei das erste Gerät (120) eingerichtet ist, in einem ersten Betriebsmodus Daten aus dem drahtgebundenen Netzwerk auf einem oder mehreren ersten Funkkanälen in das drahtlose Netzwerk zu senden;
wobei das zweite Gerät (130) eingerichtet ist, in dem ersten Betriebsmodus Daten aus dem drahtgebundenen Netzwerk auf einem oder mehreren zweiten Funkkanälen in das drahtlose Netzwerk zu senden, wobei die ersten Funkkanäle von den zweiten Funkkanälen disjunkt sind;
wobei das erste Gerät (120) eingerichtet ist zu prüfen, ob eine vorgegebene maximal zulässige Nutzungsdauer der ersten Funkkanäle durch das erste Gerät innerhalb eines festen unmittelbar zurückliegenden Zeitraums erreicht wurde, und wobei als Antwort auf das Erreichen das erste und das zweite Gerät in einen zweiten Betriebsmodus wechseln, in dem das erste Gerät (120) Daten aus dem drahtgebundenen Netzwerk auf den zweiten Funkkanälen in das drahtlose Netzwerk sendet und das zweite Gerät (130) Daten aus dem drahtgebundenen Netzwerk auf den ersten Funkkanälen in das drahtlose Netzwerk sendet.

2. System nach Anspruch 1, wobei das erste Gerät ferner eingerichtet ist, in dem ersten Betriebsmodus Daten aus dem drahtlosen Netzwerk auf den ersten Funkkanälen zu lesen und die Daten an das drahtgebundene Netzwerk zu übertragen, und in dem zweiten Betriebsmodus Daten aus dem drahtlosen Netzwerk auf den zweiten Funkkanälen zu lesen und die Daten an das drahtgebundene Netzwerk zu übertragen.

3. System nach Anspruch 1 oder 2, wobei das zweite Geräte ferner eingerichtet ist, in dem ersten Betriebsmodus Daten aus dem drahtlosen Netzwerk auf den zweiten Funkkanälen zu lesen und die Daten an das drahtgebundene Netzwerk zu übertragen, und in dem zweiten Betriebsmodus Daten aus dem drahtlosen Netzwerk auf den ersten Funkkanälen zu lesen und die Daten an das drahtgebundene Netzwerk zu übertragen.

4. System nach Anspruch 3, wobei das zweite Gerät eingerichtet ist, Daten an das drahtgebundene Netzwerk über das erste Gerät zu übertragen.

5. System nach einem der Ansprüche 1 bis 4, wobei das erste Gerät eingerichtet ist zu bestimmen, ob Daten aus dem drahtgebundenen Netzwerk über die ersten und/oder zweiten Funkkanäle an das drahtlose Netzwerk gesendet werden sollen.

6. System nach Anspruch 5, wobei das erste Gerät eingerichtet ist, Daten aus dem drahtgebundenen Netzwerk an das zweite Gerät zu übertragen, wenn die Daten über einen anderen Funkkanal als den Funkkanal eines aktuellen Betriebsmodus des ersten Geräts versendet werden sollen, insbesondere wobei das Übertragen zusätzlich zum Senden in das drahtlose Netzwerk erfolgt, falls die Daten über die ersten und zweiten Funkkanäle versendet werden sollen.

7. System nach einem der Ansprüche 1 bis 6, wobei das erste Gerät und das zweite Gerät von Geräten aus dem drahtlosen Netzwerk und/oder dem drahtgebundenen Netzwerk unter der gleichen Adresse sichtbar sind.

8. Verfahren, umfassend:
Senden, durch ein erstes Gerät (120) in einem ersten Betriebsmodus, von Daten aus einem drahtgebundenen Netzwerk (150) auf einem oder mehreren ersten Funkkanälen in ein drahtloses Netzwerk (160); und
Senden, durch ein zweites Gerät (130) in dem ersten Betriebsmodus, von Daten aus dem drahtgebundenen Netzwerk auf einem oder mehreren zweiten Funkkanälen in das drahtlose Netzwerk, wobei die ersten Funkkanäle von den zweiten Funkkanälen disjunkt sind;
wobei das erste Gerät (120) prüft, ob eine vorgegebene maximal zulässige Nutzungsdauer der ersten Funkkanäle durch das erste Gerät innerhalb eines festen unmittelbar zurückliegenden Zeitraums erreicht wurde, und wobei das erste Gerät (120) und das zweite Gerät (130) als Antwort auf das Erreichen in einen zweiten Betriebsmodus wechseln, in dem das erste Gerät (120) Daten aus dem drahtgebundenen Netzwerk auf den zweiten Funkkanälen in das drahtlose Netzwerk sendet und das zweite Gerät (130) Daten aus dem drahtgebundenen Netzwerk auf den ersten Funkkanälen in das drahtlose Netzwerk sendet.

9. Verfahren nach Anspruch 8, ferner umfassend:
Lesen, durch das erste Gerät in dem ersten Betriebsmodus, von Daten aus dem drahtlosen Netzwerk auf den ersten Funkkanälen, und Übertragen der Daten an das drahtgebundene Netzwerk; und
Lesen, durch das erste Gerät in dem zweiten Betriebsmodus, von Daten aus dem drahtlosen Netzwerk auf den zweiten Funkkanälen, und Übertragen der Daten an das drahtgebundene Netzwerk.

10. Verfahren nach Anspruch 8 oder 9, ferner umfassend:
Lesen, durch das zweite Gerät in dem ersten Betriebsmodus, von Daten aus dem drahtlosen Netzwerk auf den zweiten Funkkanälen, und Übertragen der Daten an das drahtgebundene Netzwerk; und
Lesen, durch das zweite Gerät in dem zweiten Betriebsmodus, von Daten aus dem drahtlosen Netzwerk auf den ersten Funkkanälen, und Übertragen der Daten an das drahtgebundene Netzwerk. auf den ersten Funkkanälen, und Übertragen der Daten an das drahtgebundene Netzwerk.

11. Verfahren nach Anspruch 10, wobei das zweite Gerät Daten an das drahtgebundene Netzwerk über das erste Gerät überträgt.

12. Verfahren nach einem der Ansprüche 8 bis 11, ferner umfassend:
Bestimmen, durch das erste Gerät, ob Daten aus dem drahtgebundenen Netzwerk über die ersten und/oder zweiten Funkkanäle an das drahtlose Netzwerk gesendet werden sollen.

13. Verfahren nach Anspruch 12, ferner umfassend:
Übertragen, durch das erste Gerät, von Daten aus dem drahtgebundenen Netzwerk an das zweite Gerät, wenn die Daten über einen anderen Funkkanal als den Funkkanal eines aktuellen Betriebsmodus eines ersten Geräts versendet werden sollen, insbesondere wobei das Übertragen zusätzlich zum Senden in das drahtlose Netzwerk erfolgt, falls die Daten über die ersten und zweiten Funkkanäle versendet werden sollen.

14. Verfahren nach einem der Ansprüche 8 bis 13, ferner umfassend:
Prüfen, durch das zweite Gerät, ob eine vorgegebene maximal zulässige Nutzungsdauer der zweiten Funkkanäle durch das zweite Gerät innerhalb eines festen unmittelbar zurückliegenden Zeitraums erreicht wurde, und Wechseln der Betriebsmodi des ersten Geräts und des zweiten Geräts als Antwort auf das Erreichen.

15. Computerlesbares Medium mit darauf gespeicherten Befehlen, die, wenn sie von einem Prozessor ausgeführt werden, das Verfahren nach einem der Ansprüche 8 bis 14 durchführen.

## Claims

1. A system (100), comprising:
a wired network (150);
a wireless network (160);
a first device (120) connected to the wired network and the wireless network; and
a second device (130) connected to the wireless network and the first device, wherein the connection between the first and second devices is wired;
wherein the first device (120) is arranged to transmit data from the wired network to the wireless network on one or more first radio channels in a first mode of operation;
wherein the second device (130) is arranged to transmit data from the wired network into the wireless network on one or more second radio channels in the first mode of operation, the first radio channels being disjoint from the second radio channels;
wherein the first device (120) is arranged to check whether a predetermined maximum allowed usage time of the first radio channels has been reached by the first device within a fixed immediate past time period, and wherein in response to the reaching, the first and second devices switch to a second mode of operation in which the first device sends data (120) from the wired network on the second radio channels to the wireless network and the second device (130) sends data from the wired network on the first radio channels to the wireless network.

2. The system of claim 1, wherein the first device is further adapted to, in the first mode of operation, read data from the wireless network on the first radio channels and transmit the data to the wired network, and in the second mode of operation, read data from the wireless network on the second radio channels and transmit the data to the wired network.

3. The system of claim 1 or 2, wherein the second device is further adapted to, in the first mode of operation, read data from the wireless network on the second radio channels and transmit the data to the wired network, and in the second mode of operation, read data from the wireless network on the first radio channels and transmit the data to the wired network.

4. The system of claim 3, wherein the second device is adapted to transmit data to the wired network via the first device.

5. The system according to any one of claims 1 to 4, wherein the first device is arranged to determine whether to send data from the wired network to the wireless network via the first and/or second radio channels.

6. The system of claim 5, wherein the first device is arranged to transmit data from the wired network to the second device if the data is to be sent over a radio channel other than the radio channel of a current mode of operation of the first device, in particular wherein the transmitting is in addition to sending into the wireless network if the data is to be sent over the first and second radio channels.

7. The system according to any one of claims 1 to 6, wherein the first device and the second device are visible from devices from the wireless network and/or the wired network at the same address.

8. A method, comprising:
transmitting, by a first device (120) in a first mode of operation, data from a wired network (150) on one or more first radio channels to a wireless network (160); and
transmitting, by a second device (130) in the first mode of operation, data from the wired network on one or more second radio channels into the wireless network, wherein the first radio channels are disjoint from the second radio channels;
wherein the first device (120) checks whether a predetermined maximum allowed usage time of the first radio channels has been reached by the first device within a fixed immediate past time period, and wherein the first device (120) and the second device (130) switch to a second mode of operation in response to the reaching, wherein the first device (120) transmits data from the wired network on the second radio channels to the wireless network and the second device (130) transmits data from the wired network on the first radio channels to the wireless network.

9. The method of claim 8, further comprising:
reading, by the first device in the first mode of operation, data from the wireless network on the first radio channels, and transmitting the data to the wired network; and
reading, by the first device in the second mode of operation, data from the wireless network on the second radio channels, and transmitting the data to the wired network.

10. The method of claim 8 or 9, further comprising:
reading, by the second device in the first mode of operation, data from the wireless network on the second radio channels, and transmitting the data to the wired network; and
Reading, by the second device in the second mode of operation, data from the wireless network on the first radio channels, and transmitting the data to the wired network. on the first radio channels, and transmitting the data to the wired network.

11. The method of claim 10, wherein the second device transmits data to the wired network via the first device.

12. The method of any one of claims 8 to 11, further comprising:
determining, by the first device, whether to send data from the wired network to the wireless network over the first and/or second radio channels.

13. The method of claim 12, further comprising:
transmitting, by the first device, data from the wired network to the second device if the data is to be sent over a radio channel other than the radio channel of a current operating mode of a first device, in particular wherein the transmitting is in addition to sending into the wireless network if the data is to be sent over the first and second radio channels.

14. The method of any one of claims 8 to 13, further comprising:
checking, by the second device, whether a predetermined maximum allowable duration of use of the second radio channels has been reached by the second device within a fixed immediate past time period, and changing the modes of operation of the first device and the second device in response to the reaching.

15. A computer-readable medium having instructions stored thereon which, when executed by a processor, perform the method of any one of claims 8 to 14.

## Revendications

1. Système (100) comprenant :
un réseau filaire (150) ;
un réseau sans fil (160) ;
un premier appareil (120), qui est relié avec les réseaux filaire et sans fil ; et
un deuxième appareil (130), qui est relié avec le réseau sans fil et le premier appareil, dans lequel la liaison entre les premier et deuxième appareils est filaire ;
dans lequel le premier appareil (120) est conçu pour envoyer, dans un premier mode de fonctionnement, des données provenant du réseau filaire au réseau sans fil sur un ou plusieurs premiers canaux radio ;
dans lequel le deuxième appareil (130) est conçu pour envoyer, dans le premier mode de fonctionnement, des données provenant du réseau filaire au réseau sans fil sur un ou plusieurs deuxièmes canaux radio, dans lequel les premiers canaux radio sont distincts des deuxièmes canaux radio ;
dans lequel le premier appareil (120) est conçu pour vérifier si une durée d'utilisation maximale admissible prédéterminée des premiers canaux radio par le premier appareil a été atteint dans une période fixe immédiatement précédente, et dans lequel, en tant que réponse au fait que cette durée a été atteinte, les premier et deuxième appareils passent dans un deuxième mode de fonctionnement dans lequel le premier appareil (120) envoie des données provenant du réseau filaire vers le réseau sans fil sur les deuxièmes canaux radio et le deuxième appareil (130) envoie des données provenant du réseau filaire au réseau sans fil sur les premiers canaux radio.

2. Système selon la revendication 1, dans lequel le premier appareil est en outre conçu pour lire, dans le premier mode de fonctionnement, des données provenant du réseau sans fil sur les premiers canaux radio et pour transmettre ces données au réseau filaire et dans le deuxième mode de fonctionnement, pour lire les données provenant du réseau sans fil sur les deuxièmes canaux radio et pour transmettre ces données au réseau filaire.

3. Système selon la revendication 1 ou 2, dans lequel le deuxième appareil est en outre conçu pour lire, dans le premier mode de fonctionnement, des données provenant du réseau sans fil sur les deuxièmes canaux radio et pour transmettre ces données au réseau filaire et, dans le deuxième mode de fonctionnement, pour lire des données provenant du réseau sans fil sur les premiers canaux radio et pour transmettre ces données au réseau filaire.

4. Système selon la revendication 3, dans lequel le deuxième appareil est conçu pour transmettre des données au réseau filaire par l'intermédiaire du premier appareil.

5. Système selon l'une des revendications 1 à 4, dans lequel le premier appareil est conçu pour déterminer si les données provenant du réseau filaire doivent être envoyées, par l'intermédiaire des premiers et/ou des deuxièmes canaux radio, au réseau sans fil.

6. Système selon la revendication 5, dans lequel le premier appareil est conçu pour transmettre des données provenant du réseau filaire au deuxième appareil lorsque les données doivent être envoyées, par l'intermédiaire d'un autre canal radio que le canal radio d'un mode de fonctionnement actuel du premier appareil, plus particulièrement dans lequel la transmission a lieu en plus de l'envoi vers le réseau fil, si les données doivent être envoyées par l'intermédiaire des premiers et des deuxièmes canaux radio.

7. Système selon l'une des revendications 1 à 6, dans lequel le premier appareil et le deuxième appareil sont visibles par des appareils du réseau sans fil et/ou du réseau filaire sous la même adresse.

8. Procédé comprenant :
l'envoi, par un premier appareil (120), dans un premier mode de fonctionnement, de données provenant d'un réseau filaire (150) vers un réseau sans fil (160) sur un ou plusieurs premiers canaux radio ; et
l'envoi, par un deuxième appareil (130), dans le premier mode de fonctionnement, de données provenant du réseau filaire vers le réseau sans fil sur un ou plusieurs deuxièmes canaux radio, dans lequel les premiers canaux radio sont distincts des deuxièmes canaux radio ;
dans lequel le premier appareil (120) vérifie si une durée d'utilisation maximale admissible des premiers canaux radio par le premier appareil a été atteint dans une période fixe immédiatement précédente et dans lequel le premier appareil (120) et le deuxième appareil (130), en réponse au fait que cette durée est atteinte, passent à un deuxième mode de fonctionnement dans lequel le premier appareil (120) envoie des données provenant du réseau filaire vers le réseau sans fil sur les deuxièmes canaux radio et le deuxième appareil (130) envoie des données provenant du réseau filaire vers le réseau sans fil sur les premiers canaux radio.

9. Procédé selon la revendication 8, comprenant en outre :
la lecture, par le premier appareil, dans le premier mode de fonctionnement, de données provenant du réseau sans fil sur les premiers canaux radio et transmission des données au réseau filaire ; et
lecture, par le premier appareil, dans le deuxième mode de fonctionnement, de données provenant du réseau sans fil sur les deuxièmes canaux radio et transmission des données au réseau filaire.

10. Procédé selon la revendication 8 ou 9, comprenant en outre :
lecture, par le deuxième appareil, dans le premier mode de fonctionnement, de données provenant du réseau sans fil sur les deuxièmes canaux radio et transmission des données au réseau filaire ; et
lecture, par le deuxième appareil, dans le deuxième mode de fonctionnement, de données provenant du réseau sans fil sur les premiers canaux radio et transmission des données au réseau filaire sur les premiers canaux radio et transmission des données au réseau filaire.

11. Procédé selon la revendication 10, dans lequel le deuxième appareil transmet des données au réseau filaire par l'intermédiaire du premier appareil.

12. Procédé selon l'une des revendications 8 à 11, comprenant en outre :
la détermination, par le premier appareil, si des données provenant du réseau filaire doivent être envoyées au réseau sans fil par l'intermédiaire des premiers et/ou deuxièmes canaux radio.

13. Procédé selon la revendication 12, comprenant en outre :
la transmission, par le premier appareil, de données provenant du réseau filaire au deuxième appareil lorsque les données doivent être envoyées par l'intermédiaire d'un autre canal radio en tant que canal radio d'un premier mode de fonctionnement d'un premier appareil, plus particulièrement dans lequel la transmission a lieu en plus de l'envoi vers le réseau sans fil si les données doivent être envoyées par l'intermédiaire des premiers et deuxièmes canaux radio.

14. Procédé selon l'une des revendications 8 à 13, comprenant en outre :
la vérification, par le deuxième appareil, si une durée d'utilisation maximale admissible des deuxièmes canaux radio par le deuxième appareil a été atteinte dans une période fixe immédiatement précédente et modification des modes de fonctionnement du premier appareil et du deuxième appareil en réponse au fait que cette durée a été atteinte.

15. Support lisible par un ordinateur avec des instructions enregistrées dessus qui, lorsqu'elles sont exécutées par un processeur, permettent d'exécuter le procédé selon l'une des revendications 8 à 14.
